# EUROPEAN PATENT SPECIFICATION

(11) **EP 3 780 801 B1**
(45) Date of publication and mention of the grant of the patent: **17.07.2024**
(21) Application number: 18913942.1
(22) Date of filing: 05.04.2018
(51) Int. Cl.: H04W 72/04, H04L 5/00

(54) **USER DEVICE AND WIRELESS BASE STATION**
BENUTZERVORRICHTUNG UND DRAHTLOSE BASISSTATION
DISPOSITIF UTILISATEUR ET STATION DE BASE SANS FIL

(43) Date of publication of application: 17.02.2021
(73) Proprietor: NTT DOCOMO, INC., Tokyo 100-6150 (JP)
(72) Inventor: UCHINO Tooru, Tokyo 100-6150 (JP); TAKAHASHI Hideaki, Tokyo 100-6150 (JP); KAKISHIMA Yuichi, Palo Alto, California 94304 (US)
(74) Representative: Hoffmann Eitle
(86) International application number: PCT/JP2018/014635
(87) International publication number: WO 2019/193725

(56) References cited:
- WO-A1-2017/047445
- US-A1- 2016 057 786
- US-A1- 2016 270 112
- INTERDIGITAL ET AL: "On SRS for NR", vol. RAN WG1, no. Qingdao, P.R. China; 20170627 - 20170630, 26 June 2017 (2017-06-26), XP051300139, Retrieved from the Internet <URL:http://www.3gpp.org/ftp/Meetings_3GPP_SYNC/RAN1/Docs/> [retrieved on 20170626]
- INTERDIGTAL, INC.: "On SRS for NR", 3GPP TSG RAN WG1 ADHOC_NR_AH_1706 RL-1710938, 30 June 2017 (2017-06-30), XP051300139, Retrieved from the Internet <URL:http://www.3gpp.org/ftp/tsg_ran/WG1_RL1/TSGR1_AH/NR_AH_1706/Docs/Rl-1710938.zip>
- HUAWEI ET AL.: "Discussion on CSI framework design", 3GPP TSG RAN WG1 #89 RL-1706926, 19 May 2017 (2017-05-19), XP051261583, Retrieved from the Internet <URL:http://www.3gpp.org/ftp/tsg_ran/WGl_RLl/TSGR1_89/Docs/R1-1706926.zip>
- ERICSSON: "On dynamic triggering for CSI reports and CSI-RS", 3GPP TSG RAN WG1 ADHOC_NR_AH_1706 R1-1711032, 30 June 2017 (2017-06-30), XP051300232, Retrieved from the Internet <URL:http://www.3gpp.org/ftp/tsg_ran/WG1_RL1/TSGR1_AH/NR_AH_1706/Docs/R1-1711032.zip>

## Description

### TECHNICAL FIELD

0001 The present invention relates to a terminal and a radio base station capable of performing radio communication.

### BACKGROUND ART

0002 3rd Generation Partnership Project (3GPP) specifies Long Term Evolution (LTE), and with the aim of further speeding, specifies LTE-Advanced (hereinbelow, the LTE includes the LTE-Advanced) . Moreover, in the 3GPP, further, specification of a succeeding system of the LTE called 5G New Radio (NR) and the like is being considered.

0003 In the NR, in addition to Periodic and Aperiodic, Semi-Persistent is newly defined as a method for transmitting a report of Channel State Information (CSI) and Sounding Reference Signal (SRS) (see Non-Patent Document 1).

0004 In the Semi-Persistent method, upon receiving a request from a radio base station (gNB), a user equipment (UE) performs the CSI reporting and SRS transmission in each set period.

### PRIOR ART DOCUMENT

### NON-PATENT DOCUMENT

0005 Non-Patent Document 1: 3GPP TS 38.331. V15.0.0 3rd Generation Partnership Project; Technical Specification Group Radio Access Network NR Radio Resource Control (RRC) protocol specification (Release 15), 3GPP, December 2017.

3GPP R1-1710938 relates to reference signals for new radio(NR): CSI-RS resources may be configured as Semi-Persistent.

### PATENT DOCUMENT

US 2016 0270112 A1 relates to a wireless device that, when a time alignment timer of the first TAG expires, stops reception of downlink shared channel transport blocks on a first secondary cell in the secondary PUCCH group and continues reception of downlink multicast channel transport blocks on a first secondary cell.

US 2016/057786 A1 discloses a terminal configured to transmit channel state information and/or reference signal to a radio base station, and configured to deactivate transmission performed by the transmitting unit when a time alignment timer of an uplink transmission expires.

### SUMMARY OF THE INVENTION

0006 Once timeAlignmentTimer by using which validity period of Timing Advance Command is measured expires, UE determines that uplink (UL) synchronization cannot be established and stops transmission using a channel other than a random access channel (RACH).

0007 Moreover, once the timeAlignmentTimer expires, the UE releases radio resources for CSI and SRS, regardless of the transmission method. In other words, even in the Semi-Persistent method, the radio resources are released.

0008 Because, in the Semi-Persistent method, the UE performs CSI reporting and SRS transmission only when a request is received from gNB, the radio resources for the CSI and the SRS can be used commonly between a plurality of the UEs. However, because the radio resources are released even in the Semi-Persistent method once the timeAlignmentTimer expires, when the UE completes the random access procedure and returns to the previous state, reconfiguring the radio resources in a radio resource control layer (RRC) again becomes necessary.

0009 Therefore, the present invention has been made in view of the above circumstances. One object of the present invention is to provide a terminal and a radio base station that are capable of realizing a more efficient utilization of radio resources for CSI and SRS.

0010 The object of the invention is achieved by the subject-matter of the independent claims. Advantageous embodiments are defined in the dependent claims. Further examples are provided for facilitating the understanding of the invention.

### BRIEF DESCRIPTION OF DRAWINGS

11

0012
FIG. 1 is an overall schematic configuration diagram of a radio communication system 10.
FIG. 2 is a functional block diagram of UE 200A.
FIG. 3 is a functional block diagram of gNB 100.
FIG. 4 is a diagram showing a sequence of transmission of CSI or SRS performed by the gNB 100 and the UE 200A (Part 1).
FIG. 5 is a diagram showing the sequence of the transmission of the CSI or the SRS performed by the gNB 100 and the UE 200A (Part 2).
FIG. 6 is a diagram showing examples of hardware configurations of the gNB 100, the UE 200A, and UE 200B.

### MODES FOR CARRYING OUT THE INVENTION

0013 Exemplary embodiments are explained below with reference to the accompanying drawings. Note that, the same or similar reference numerals are attached to the same functions and configurations, and the description thereof is appropriately omitted.

### (1) Overall Schematic Configuration of Radio Communication System

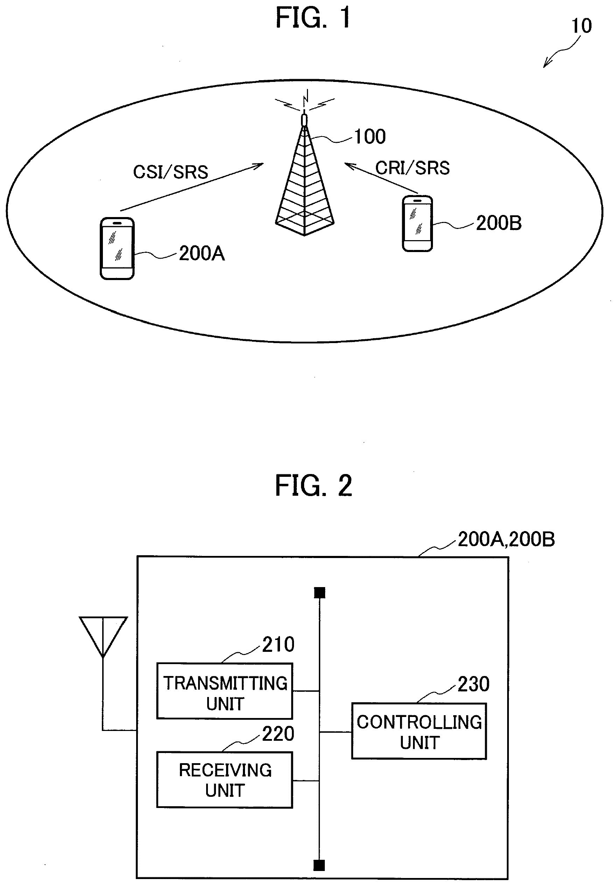

0014 FIG. 1 is an overall schematic configuration diagram of a radio communication system 10 according to the present embodiment. The radio communication system 10 includes a radio base station 100 (hereinafter, "gNB 100"), and user equipments 200A and 200B (hereinafter, "UE 200A and UE 200B").

0015 The gNB 100 and the UE 200A (the same applies to the UE 200B, hereinafter the same) perform radio communication in accordance with 5G New Radio (hereinafter, "NR") specifications. Particularly, in the present embodiment, the UE 200A transmits to the gNB 100 a report of Channel State Information (CSI) and a Sounding Reference Signal (SRS). The CSI is transmitted by using PUCCH (Physical Uplink Control Channel)

0016 The CSI indicates a quality measurement result of a downlink (DL) channel, such as Channel Quality Indicator (CQI) and the like. The SRS is a reference signal used by the gNB 100 for performing quality measurement in an uplink (UL) channel. Based on such a quality measurement, an appropriate Modulation and Coding Scheme (MCS) can be selected for each UE.

0017 Moreover, to perform Fourier transform (FFT) on the UL signals transmitted from a plurality of the UEs (the UE 200A and the UE 200B shown in FIG. 1) at the same time, the gNB 100 aligns the transmission timings of the UL signals (performs Time Alignment) for each UE. Such an alignment is performed because the propagation delay between each UE and the gNB 100 is different.

### (2) Functional Block Configuration of Radio Communication System

0018 Next, a functional block configuration of the radio communication system 10 will be explained. Specifically, the functional block configuration of the gNB 100 and the UE 200A (UE 200B) is explained. For convenience of explanation, the UE 200A will be explained first.

### (2.1) UE 200A

0019 FIG. 2 is a functional block diagram of the UE 200A. As shown in FIG. 2, the UE 200A includes a transmitting unit 210, a receiving unit 220, and a controlling unit 230. Note that the UE 200B also has a similar functional block configuration.

0020 The transmitting unit 210 transmits UL signal of the NR. The UL signal transmitted by the transmitting unit 210 includes signals of a physical layer (PHY) (radio signal), a radio resource control layer (RRC), and a non-access stratum (NAS) .

0021 In the present embodiment, the transmitting unit 210 can transmit to the radio base station by the Semi-Persistent method the CSI and / or the SRS (hereinafter, "CSI / SRS") by using predetermined radio resources (such as frequency, time, and space) base station by the Semi-Persistent method.

0022 The transmitting unit 210 supports a plurality of transmission methods including Semi-Persistent. Specifically, the transmitting unit 210 can transmit the CSI and the SRS by using any of the "Periodic", "Aperiodic", and " Semi-Persistent" transmission methods.

0023 In the "Periodic" method, when the radio resources are configured in the RRC, the CSI / SRS is autonomously transmitted in each set period.

0024 In the "Aperiodic" method, when the radio resources are configured in the RRC, the CSI / SRS is transmitted only once each time a request is received from the gNB 100. In the "Aperiodic", the plurality of the UEs can commonly use the same radio resources.

0025 In the " Semi-Persistent" method, when the radio resources are configured in the RR C and a request is received from the gNB 100, the CSI / SRS is transmitted autonomously in each set period. In the " Semi-Persistent" method, the plurality of the UEs can commonly use the same radio resources, and signaling relating to the request from the gNB 100, too, can be suppressed.

0026 The receiving unit 220 receives DL signal of the NR. Similar to the transmitting unit 210, the DL signal received by the receiving unit 220 includes signals of a physical layer (PHY) (radio signal), a radio resource control layer (RRC), and a non-access stratum (NAS).

0027 The controlling unit 230 performs controls relating to the UL signals transmitted by the transmitting unit 210 and the DL signals received by the receiving unit 220.

0028 Particularly, in the present claimed embodiment, the controlling unit 230 performs control relating to the alignment of the UL signal transmission timings.

0029 Specifically, when a timing alignment timer (timeAlignmentTimer) for the uplink ( UL) transmission expires in a state in which "Semi-Persistent" is set, the controlling unit 230 retains the radio resources for the CSI / SRS transmission, and deactivates the CSI / SRS transmission performed by the transmitting unit 210.

0030 More specifically, even when the time Alignment Timer by using which a valid period of the Timing Advance ( TA) Command that indicates the transmission timing of the UL signal is measured expires, the controlling unit 230 does not release and retains the radio resources for the CSI / SRS transmission. On the other hand, the controlling unit 230 deactivates the CSI / SRS transmission performed by the transmitting unit 210.

0031 Moreover, when the time Alignment Timer is restarted, the controlling unit 230 autonomously activates the CSI / SRS transmission performed by the transmitting unit 210. Furthermore, the time Alignment Timer is restarted upon receiving the TA command.

0032 Moreover, if the controlling unit 230 performs different control in a control (handling) to be performed when the time Alignment Timer for the CSI expires and a control to be performed when the time Alignment Timer for the SRS expires. For example, in the case of the CSI, the radio resources can be released, and in the case of the SRS, the transmission can be deactivated while retaining the radio resources.

0033 Furthermore, the controlling unit 230 can apply a different handling for each radio resource (for example, for each frequency band) for the CSI (or the SRS).

0034 Moreover, the controlling unit 230 can apply a different handling for each CSI / SRS transmission method. For example, in the "Periodic" method, the radio resources can be released, and in the "Aperiodic" method, the radio resources can be retained.

0035 In other words, any of the handling (releasing the radio resources or retaining thereof) can be applied for each of the "Periodic", "Aperiodic", and " Semi -Persistent" transmission methods. Furthermore, the handling to be applied can be set from a not-shown core network side.

0036 Moreover, a timing at which the controlling unit 230 deactivates the CSI / SRS transmission performed by the transmitting unit 210 can be the same as a timing at which the time Alignment Timer expires or a timing at which the time Alignment Timer is restarted the next time. Alternatively, the timing at which the controlling unit 230 deactivates the CSI / SRS transmission can be a timing at which the random access procedure (RAprocedure) using the random access channel (RACH) is completed after the time Alignment Timer has expired.

0037 Furthermore, the timing at which the transmission is actually deactivated can be after a predetermined period has elapsed since the timing explained above (for example, a next transmission timing when the transmission is not deactivated, or a timing of a next UL subframe).

0038 Moreover, when the time Alignment Timer is restarted, the timing at which the controlling unit 230 autonomously activates (resumes) the CSI / SRS transmission performed by the transmitting unit 210 can be the same as a timing at which the timeAlignmentTimer is reactivated, or at a timing when an instruction to activate the CSI / SRS transmission is received from the gNB 100.

0039 If the transmission is resumes at the same time as that at which the time Alignment Timer is reactivated, the CSI / SRS transmission can be resumed at an earlier time period. On the other hand, if the transmission is resumed at the timing when the instruction to activate the CSI / SRS transmission is received again from the gNB 100, a time period during which a state relating to the CSI / SRS transmission becomes inconsistent between the gNB 100 and the UE 200Acan be minimized. Alternatively, a timing at which the transmission is actually resumed can be a timing reached after a predetermined time period is elapsed since the timing explained above.

0040 When the carrier based SRS switching is applied, the controlling unit 230 can performs different control in a control to be performed when the time Alignment Timer for the SRS to which the switching is applied expires, and a control to be performed when the time Alignment Timer for the SRS to which the switching is not applied expires.

0041 In the carrier based SRS switching, assuming the reciprocity between the UL and the DL in TDD (Time Division Duplex), quality of the DL is estimated by using the SRS transmitted from the UE 200A. However, there is a constraint that the SRS cannot be transmitted simultaneously in a plurality of component carriers ( CCs). In other words, the carrier based SRS switching is supported only in TDM ( TDD) in which switching of the component carriers is possible.

0042 Specifically, when attempting to suppress the SRS transmission because of the expiration of timeAlignmentTimer, the controlling unit 230 controls the operation of the UE 200A according to any of the following methods:
▪ Releasing the radio resources for the SRS by including the configuration of the carrier based SRS switching;
▪ Deleting the association between the carrier based SRS switching configuration and the radio resources for the SRS;
▪ Retaining the carrier based SRS switching configuration and deleting the radio resources for the SRS.

However, in the carrier-based SRS switching, a TDM-based control can be performed for a part or all of the component carriers used in the transmission of the UL signals, or a control can be performed in the PUSCH ( Physical Uplink Shared Channel) and / or the PUCCH on the component carriers that are not supported (for which transmission configuration is not performed).

### (2.2) gNB 100

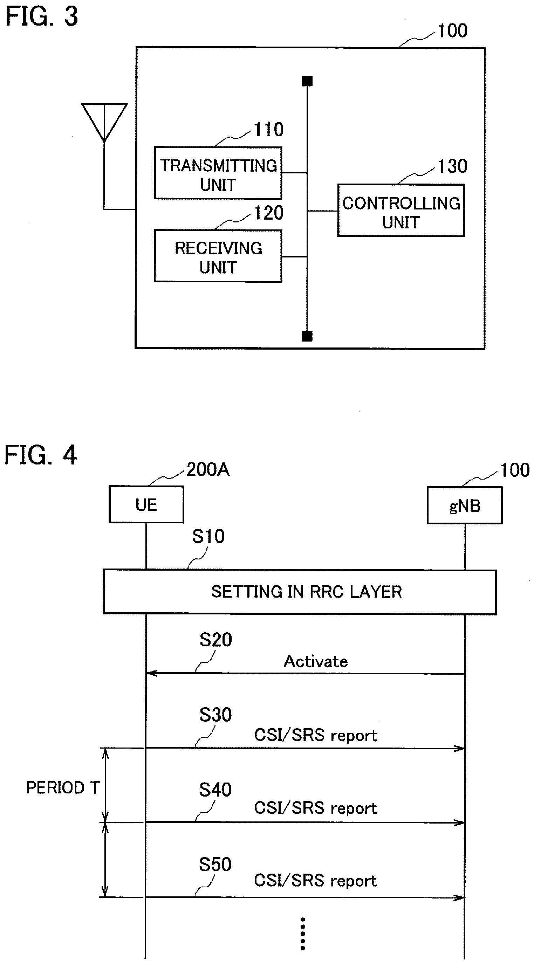

FIG. 3 is a functional block diagram of the gNB 100. As shown in FIG. 3, the gNB 100 includes a transmitting unit 110, a receiving unit 120, and a controlling unit 130.

0045 The transmitting unit 110 transmits a DL signal according to the NR system. The DL signal transmitted by the transmitting unit 110 includes a physical layer (PHY) signal (radio signal) and a radio resource control layer (RR C) signal.

0046 The receiving unit 120 receives the UL signal according to the NR system. Similar to the transmitting unit 110, the UL signal received by the receiving unit 120 includes a physical layer (PHY) signal (radio signal), a radio resource control layer (RRC) signal, and a non-access stratum (NAS) signal.

0047 In the present embodiment, the receiving unit 120 receives from the UE 200A ( UE 200B) the CSI and / or the SRS by using predetermined radio resources (such as frequency, time, and space) by the Semi-Persistent transmission method. Similar to the UE 200A, the gNB 100 supports the plurality of the transmission methods including the Semi-Persistent method. Specifically, the receiving unit 120 can receive the CSI and the SRS transmitted from the UE 200A by using any of the "Periodic", "Aperiodic", and " Semi-Persistent" transmission methods.

0048 The controlling unit 130 performs control relating to the DL signals transmitted by the transmitting unit 110 and the UL signals received by the receiving unit 120.

0049 Particularly, in the present claimed embodiment, even when the timing alignment timer ( time Alignment Timer) for the uplink ( UL) transmission in the UE 200Ahas expired in a state in which in " Semi-Persistent" is configured, the controlling unit 130 retains the radio resources for the CSI / SRS transmission performed by the UE 200A.

0050 Specifically, even when the time Alignment Timer in the UE 200Ais expired, the controlling unit 130 does not release but retains the radio resources for the CSI / SRS transmission. 0051 (3) Operation of Radio Communication System Operation of the radio communication system 10 is explained below. Specifically, an operation in which the gNB 100 and the UE 200A transmit the CSI or the SRS is explained.

### 0052 (3.1) Operation Example 1

In FIG. 4, a sequence in which the transmission of the CSI or the SRS is performed by the gNB 100 and the UE 200A ( part 1) is shown. In the present operation example, the Semi-Persistent transmission method is configured as the transmission method of the CSI / SRS.

0053 As shown in FIG. 4, the gNB 100 and the UE 200A perform settings in the RRClayer ( Step S10). Accordingly, the transmitting and receiving the CSI / SRS becomes possible.

0054 The gNB 100 transmits to the UE 200A a command (Activate) via which the CSI / SRS transmission in the Semi-Persistent is activated (Step S20).

0055 According to the received command, the UE 200A transmits the CSI / SRS for every period T ( Steps S30 to S50). Note that, as explained above, "CSI / SRS" indicates the CSI and / or SRS (represented as CSI / SRS report in the figures) .

### 0056 (3.2) Operation Example 2

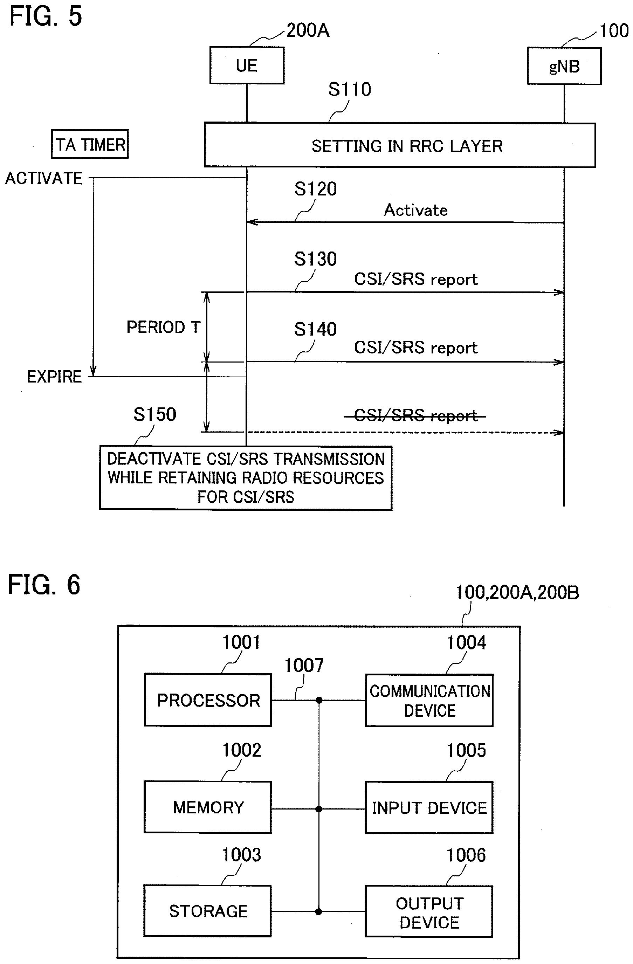

In FIG. 5, a sequence in which the transmission of the CSI or the SRS is performed by the gNB 100 and the UE 200A ( part 2) is shown. Even in the present operation example, "Semi-Persistent" is configured as the transmission method of the CSI / SRS. Apart of the operations that is different from that performed in Operation Example 1 will be mainly explained below.

0057 After performing the settings in the RR Clayer ( Step S110), the UE 200A activates the time Alignment Timer ( TA timer in the figure).

0058 The UE 200A transmits the CSI / SRS in each period T ( Steps S130 and S140). Moreover, the time Alignment Timer ( TA timer) expires after the CSI / SRS is transmitted at Step S130.

0059 Once the timeAlignmentTimer expires, the UE 200A deactivates the CSI / SRS transmission while retaining the radio resources for the CSI / SRS transmission (Step S150).

### 0060 (4) Effects and Advantages

The following operational effects can be obtained according to the embodiments explained above. Specifically, when the time Alignment Timer expires in the state in which "Semi-Persistent" is configured, the UE 200A (the same applies to the UE 200B, hereinafter the same) retains the radio resources for the CSI / SRS transmission, and deactivates the CSI / SRS transmission. In the similar manner, the gNB 100, too, retains the radio resources for the CSI / SRS transmission. 0061 In this manner, because the radio resources for the CSI / SRS transmission are retained, it is not necessary to reconfigure the radio resources in the RRC even when the UE 200A completes the random access procedure and returns to the previous state.

0062 Furthermore, because the radio resources used for the Semi-Persistent method can be used commonly between the plurality of the UEs, even when the radio resources are retained, utilization efficiency of the radio resources is not adversely affected. Moreover, because one of the aims of using the Semi-Persistent method (same for the Aperiodic method) is to essentially avoid reconfiguration of the radio resources in the RRC, according to the present embodiment, even when the timeAlignmentTimer expires, such reconfiguration can be reliably avoided.

0063 Accordingly, as a result, convergence delay till the selection of MCS for the UE 200A, and increase in overhead because of the transmission and reception of signals relating to the reconfiguration can be suppressed. In other words, according to the radio communication system 10, effective utilization of the radio resources for the CSI and the SRS can be realized.

0064 In the present embodiment, when the time Alignment Timer is restarted, the UE 200A can activate (resume) the transmission of the CSI / SRS. Therefore, transmission of the CSI / SRS can be promptly resumed by using the retained radio resources for the CSI / SRS transmission. Accordingly, a more efficient utilization of the radio resources for the CSI and the SRS can be realized.

0065 In the present embodiment, the UE 200Acan performs different control in the control ( handling) to be performed when the time Alignment Timer for the CSI expires and the control to be performed when the timeAlignmentTimer for the SRS expires. Therefore, it is possible to realize an appropriate handling of the radio resources according to the characteristics of the CSI and the SRS or the amount of the radio resources that can be secured within a cell.

0066 In the present embodiment, when the carrier based SRS switching is applied, the UE 200A can performs different control in a control to be performed when the time Alignment Timer for the SRS to which the carrier based SRS switching is applied expires, and a control to be performed when the time Alignment Timer for the SRS to which the carrier based SRS switching is not applied expires. Therefore, an appropriate handling of the radio resource according to the characteristics of the carrier based SRS switching can be realized.

### 0067 (5) Other Embodiments

The present invention has been explained in detail by using the above mentioned embodiments; however, it is self-evident to a person skilled in the art that the present invention is not limited to the embodiments explained herein and that the embodiments can be modified or improved in various ways.

0068 For example, a control (handling) to be performed when the time Alignment Timer for the CSI expires and a control (handling) to be performed when the time Alignment Timer for the SRS expires can be different for each component carrier ( CC) (specifically, for P Cell (Primary Cell), PS Cell (Primary S Cell) PUCCH S Cell (Secondary Cell), or a normal S Cell) .

0069 Alternatively, such a handling can be different depending on the UL type (Supplemental UL) and Normal UL (non-SUL), or can be different for each BWP (Bandwidth part) (initial BWP, default BWP, or other BWP). Alternatively, the handling for the CSI and the handling for the SRS can differ in the attributes explained above.

0070 In the embodiments explained above, the PUCCH and SRS used for CSI transmission are explained as an example, however, a similar control can be applied to other channels (for example, PUSCH (Physical Uplink Shared Channel)) to which the similar control can be applied.

0071 The embodiments explained above are explained by citing the NR as an example. However, the similar control can be applied in the LTE.

0072 Moreover, the block diagrams used for explaining the embodiments (FIGS. 2 and 3) show functional blocks. Those functional blocks (structural components) can be realized by a desired combination of hardware and / or software. Means for realizing each functional block is not particularly limited. That is, each functional block may be realized by one device combined physically and / or logically. Alternatively, two or more devices separated physically and / or logically may be directly and / or indirectly connected (for example, wired and / or wireless) to each other, and each functional block may be realized by these plural devices.

0073 Furthermore, the gNB 100, the UE 200A, and the UE 200B (device) explained above can function as a computer that performs the processing of the present invention. FIG. 6 is a diagram showing an example of a hardware configuration of these devices. As shown in FIG. 6, these devices can be configured as a computer device including a processor 1001, a memory 1002, a storage 1003, a communication device 1004, an input device 1005, an output device 1006, a bus 1007, and the like.

0074 The functional blocks of these devices (see FIGS. 2 and 3) can be realized by any of hardware elements of the computer device or a desired combination of the hardware elements.

0075 The processor 1001, for example, operates an operating system to control the entire computer. The processor 1001 can be configured with a central processing unit ( CPU) including an interface with a peripheral device, a control device, a computing device, a register, and the like.

0076 The memory 1002 is a computer readable recording medium and is configured, for example, with at least one of ROM (Read Only Memory), EPROM ( Erasable Programmable ROM), EEPROM (Electrically Erasable Programmable ROM), RAM (Random Access Memory), and the like. The memory 1002 can be called register, cache, main memory (main memory), and the like. The memory 1002 can store therein a computer program (computer program codes), software modules, and the like that can execute the method according to the above embodiments.

0077 The storage 1003 is a computer readable recording medium. Examples of the storage 1003 include an optical disk such as CD-ROM ( Compact Disc ROM), a hard disk drive, a flexible disk, a magneto-optical disk (for example, a compact disk, a digital versatile disk, a Blu-ray ( Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

0078 The communication device 1004 is hardware (transmission / reception device) capable of performing communication between computers via a wired and / or wireless network. The communication device 1004 is also called, for example, a network device, a network controller, a network card, a communication module, and the like.

0079 The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

0080 In addition, the respective devices, such as the processor 1001 and the memory 1002, are connected to each other with the bus 1007 for communicating information there among. The bus 1007 can be constituted by a single bus or can be constituted by separate buses between the devices.

0081 In addition, the manner of notification of information is not limited to the one explained in the embodiments, and the notification may be performed in other manner. For example, the notification of information can be performed by physical layer signaling (for example, DCI (Downlink Control Information), UCI (Uplink Control Information)), upper layer signaling (for example, RRC signaling, MAC ( Medium Access Control) signaling, notification information (MIB (Master Information Block), SIB (System Information Block)), other signals, or a combination thereof. In addition, the RRC signaling can be called RRC message, and the RRC signaling can be, for example, RRC Connection Setup message, RRC Connection Reconfiguration message, and the like.

0082 Furthermore, the input / output information can be stored in a specific location (for example, a memory) or can be managed in a management table. The information to be input / output can be overwritten, updated, or added. The information can be deleted after outputting. The inputted information can be transmitted to another device.

0083 The order of the sequences, flowcharts, and the like in the embodiments can be rearranged unless there is a contradiction.

0084 Moreover, in the embodiments explained above, the specific operations performed by the gNB 100 can be performed by another network node (device). Moreover, functions of the gNB 100 can be provided by combining a plurality of other network nodes.

0085 Moreover, the terms used in this specification and / or the terms necessary for understanding the present specification can be replaced with terms having the same or similar meanings. For example, a channel and / or a symbol can be replaced with a signal (signal) if that is stated. Also, the signal can be replaced with a message. Moreover, the terms "system" and "network" can be used interchangeably.

0086 Furthermore, the used parameter and the like can be represented by an absolute value, can be expressed as a relative value from a predetermined value, or can be represented by corresponding other information. For example, the radio resource can be indicated by an index.

0087 The gNB 100 (base station) can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use RRH: Remote Radio Head).

0088 The term "cell" or "sector" refers to a part or all of the coverage area of a base station and / or a base station subsystem that performs communication service in this coverage. In addition, the terms "base station" "eNB", "cell", and "sector" can be used interchangeably in the present specification. The base station can also be referred to as a fixed station, NodeB, eNodeB (eNB), gNodeB (gNB), an access point, a femtocell, a small cell, and the like.

0089 The UE 200Aand the UE 200B are called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

0090 As used herein, the phrase "based on" does not mean "based only on" unless explicitly stated otherwise. In other words, the phrase "based on" means both "based only on" and "based at least on".

0091 Furthermore, the terms "including", "comprising", and variants thereof are intended to be inclusive in a manner similar to "having". Furthermore, the term "or" used in the specification or claims is intended not to be an exclusive disjunction.

0092 Any reference to an element using a designation such as "first", "second", and the like used in the present specification generally does not limit the amount or order of those elements. Such designations can be used in the present specification as a convenient way to distinguish between two or more elements. Thus, the reference to the first and second elements does not imply that only two elements can be adopted, or that the first element must precede the second element in some or the other manner.

0093 Throughout the present specification, for example, during translation, if articles such as a, an, and the in English are added, these articles shall include plurality, unless it is clearly indicated that it is not so according to the context.

0094 As described above, the details of the present invention have been disclosed by using the embodiments of the present invention. However, the description and drawings which constitute part of this disclosure should not be interpreted so as to limit the present invention. From this disclosure, various alternative embodiments, examples, and operation techniques will be apparent to a person skilled in the art.

### INDUSTRIAL APPLICABILITY

0095 As explained above, the present invention is useful in that, a more efficient utilization of the radio resources for the CSI and the SRS can be realized.

### EXPLANATION OF REFERENCE NUMERALS

0096
- 10: radio communication system
- 100: gNB
- 110: transmitting unit
- 120: receiving unit
- 130: controlling unit
- 200A, 200B: UE
- 210: transmitting unit
- 220: receiving unit
- 230: controlling unit
- 1001: processor
- 1002: memory
- 1003: storage
- 1004: communication device
- 1005: input device
- 1006: output device
- 1007: bus

## Claims

1. A terminal (200) comprising:
a transmitting unit (210) configured to transmit channel state information and / or reference signal to a radio base station (100) by using predetermined radio resources by Semi-Persistent transmission method; and
a controlling unit (230) configured to retain the predetermined radio resources and deactivate transmission performed by the transmitting unit (210) when a time alignment timer of an uplink transmission expires,
wherein the controlling unit (230) is configured to, when the time alignment timer expires, deactivate transmission of the channel state information performed by the transmitting unit and to control the reference signal differently from a control of the channel state information.

2. The terminal (200) as claimed in claim 1, wherein the controlling unit (230) is configured to activate the transmission performed by the transmitting unit when the time alignment timer is restarted.

3. The terminal (200) as claimed in claim 1, wherein, the controlling unit (230) is configured to, when the carrier based SRS switching is applied, performs different control in a control to be performed when the time alignment timer for the reference signal to which the switching is applied expires and a control to be performed when the time alignment timer for the reference signal to which the switching is not applied expires.

4. A radio base station (100) comprising:
a receiving unit (120) configured to receive from a terminal (200) channel state information and / or a reference signal transmitted by using predetermined radio resources by Semi-Persistent transmission method; and
a controlling unit (130) configured to retain the predetermined radio resources even when a time alignment timer of an uplink transmission in the terminal expires

## Patentansprüche

1. Endgerät (200), umfassend:
eine Sendeeinheit (210), die konfiguriert ist, um Kanalzustandsinformationen und/oder ein Referenzsignal an eine Funkbasisstation (100) unter Verwendung vorbestimmter Funkressourcen nach dem Verfahren der semipersistenten Übertragung zu senden; und
eine Steuereinheit (230), die konfiguriert ist, um die vorbestimmten Funkressourcen beizubehalten und die von der Sendeeinheit (210) durchgeführte Übertragung zu deaktivieren, wenn ein Zeitausrichtungszeitgeber einer Uplink-Übertragung abläuft,
wobei die Steuereinheit (230) konfiguriert ist, um, wenn der Zeitausrichtungszeitgeber abläuft, die von der Sendeeinheit durchgeführte Übertragung der Kanalzustandsinformationen zu deaktivieren und das Referenzsignal anders als eine Steuerung der Kanalzustandsinformationen zu steuern.

2. Endgerät (200) nach Anspruch 1, wobei die Steuereinheit (230) konfiguriert ist, um die von der Sendeeinheit durchgeführte Übertragung zu aktivieren, wenn der Zeitausrichtungszeitgeber neu gestartet wird.

3. Endgerät (200) nach Anspruch 1, wobei die Steuereinheit (230) konfiguriert ist, um, wenn die trägerbasierte SRS-Umschaltung angewendet wird, eine unterschiedliche Steuerung durchzuführen, und zwar eine Steuerung, die durchgeführt wird, wenn der Zeitausrichtungszeitgeber für das Referenzsignal, auf das die Umschaltung angewendet wird, abläuft, und eine Steuerung, die durchgeführt wird, wenn der Zeitausrichtungszeitgeber für das Referenzsignal, auf das die Umschaltung nicht angewendet wird, abläuft.

4. Funkbasisstation (100), umfassend:
eine Empfangseinheit (120), die konfiguriert ist, um von einem Endgerät (200) Kanalzustandsinformationen und/oder ein Referenzsignal zu empfangen, das unter Verwendung vorbestimmter Funkressourcen nach dem Verfahren der semipersistenten Übertragung gesendet wird; und
eine Steuereinheit (130), die konfiguriert ist, um die vorbestimmten Funkressourcen auch dann beizubehalten, wenn ein Zeitausrichtungszeitgeber einer Aufwärtsübertragung in dem Endgerät abläuft.

## Revendications

1. Terminal (200) comprenant :
une unité de transmission (210) configurée pour transmettre des informations d'état de canal et/ou un signal de référence à une station (100) de base radio en utilisant des ressources radio prédéterminées par un procédé de transmission semi-persistant ; et
une unité de commande (230) configurée pour conserver les ressources radio prédéterminées et désactiver la transmission mise en oeuvre par l'unité de transmission (210) lorsqu'un temporisateur de réglage de synchronisation d'une transmission en liaison montante expire,
dans lequel l'unité de commande (230) est configurée pour, lorsque le temporisateur de réglage de synchronisation expire, désactiver la transmission des informations d'état de canal mise en oeuvre par l'unité de transmission et pour commander le signal de référence différemment d'une commande des informations d'état de canal.

2. Terminal (200) selon la revendication 1, dans lequel l'unité de commande (230) est configurée pour activer la transmission mise en oeuvre par l'unité de transmission lorsque le temporisateur de réglage de synchronisation est redémarré.

3. Terminal (200) selon la revendication 1, dans lequel l'unité de commande (230) est configurée pour, lorsque la commutation du SRS basée sur porteuse est appliquée, mettre en oeuvre une commande différente dans une commande à mettre en oeuvre lorsque le temporisateur de réglage de synchronisation pour le signal de référence auquel la commutation est appliquée expire et une commande à mettre en oeuvre lorsque le temporisateur de réglage de synchronisation pour le signal de référence auquel la commutation n'est pas appliquée expire.

4. Station (100) de base radio comprenant :
une unité de réception (120) configurée pour recevoir en provenance d'un terminal (200) des informations d'état de canal et/ou un signal de référence transmis en utilisant des ressources radio prédéterminées par un procédé de transmission semi-permanent ; et
une unité de commande (130) configurée pour conserver les ressources radio prédéterminées même lorsqu'un temporisateur de réglage de synchronisation d'une transmission en liaison montante dans le terminal expire.
